# FASCICULE DE BREVET EUROPEEN

(11) **EP 0 610 908 B1**
(45) Date de publication et mention de la délivrance du brevet: **15.09.1999**
(21) Numéro de dépôt: 94101971.3
(22) Date de dépôt: 09.02.1994
(51) Int. Cl.: H02J 13/00

(54) **Procédé d'installation d'une nouvelle fonction de commande pour appareils électriques**
Verfahren zur Installation eines neuen Betriebsmodus für Elektrogeräte
A method for installation of a novel operation mode for electric appliances

(30) Priorité: 12.02.1993 FR 9301627
(43) Date de publication de la demande: 17.08.1994
(73) Titulaire: Moulinex S.A., 13123 Cormelles-le-Royal (FR)
(72) Inventeur: Leveque, Patrick Michel Guy, F-50000 Saint Lo (FR); Letorey, Joseph Arthur Philippe Marie, F-14390 Varaville (FR); Parise, Vital André, F-14400 Arganchy (FR)
(74) Mandataire: May, Hans Ulrich, Dr.

(56) Documents cités:
- EP-A- 0 069 470
- EP-A- 0 320 390
- WO-A-87/03405
- FR-A- 2 558 609
- US-A- 4 173 754
- US-A- 4 808 841

## Description

L'invention se rapporte à un ensemble de contrôle du fonctionnement d'appareils domestiques électriques selon le préambule de la revendication 1 (c.f. US-A-4 173 754).

Dans les ensembles de contrôle connus de ce type et comme cela est décrit dans le brevet américain US-A-4 173 754, par exemple pour des applications de domotique où une centrale maître régit le fonctionnement d'unités esclaves reliées à différents consommateurs électriques tels que des radiateurs de chauffage, des installations d'éclairage ou des appareils électroménagers, la centrale maître comprend toutes les informations nécessaires au fonctionnement des unités esclaves et des appareils qui y sont reliés. La centrale communique aux esclaves des informations complètes relatives au fonctionnement exigé. Par exemple pour un esclave auquel est relié une installation d'éclairage les informations seront par exemple du type "éclairage éteint", "éclairage tamisé", "éclairage tamisé", "éclairage confort" et "éclairage maximal", l'unité esclave comprenant des moyens de changement de la puissance électrique fournie à l'installation d'éclairage.

Ces ensembles de communication présentent le désavantage majeur d'être limité au champ d'application prévu par le constructeur dans la mesure ou toutes les instructions de fonctionnement des unités esclaves sont contenues dans la mémoire de la centrale maître. Ainsi, si on souhaite une nouvelle fonction, celle-ci n'étant pas prévue dans la programmation initiale, la centrale sera incapable de communiquer les instructions nécessaires à l'esclave pour l'éclairage, par exemple, il sera impossible de demander un clignotement.

Le but de la présente invention est l'adaptation d'un ensemble de contrôle connu à toute nouvelle fonction de commande même si cette fonction n'était pas prévue ou si elle était encore ignorée lors de la construction de la centrale.

Selon l'invention, lors de l'installation d'une unité esclave (2) celle-ci transmet à l'unité maître (1) une liste d'au moins un mode pour lequel elle est susceptible de remplir une fonction, un libellé et un code associé à chaque mode, et éventuellement une information relative à l'existence d'au moins une consigne associée respectivement au fonctionnement de chaque mode, tandis que la centrale maître (1) après affichage de chaque libellé se met en attente de la programmation par l'utilisateur d'un événement consécutivement auquel elle devra communiquer à l'unité esclave un ordre de fonctionner selon le mode correspondant au libellé, et éventuellement des paramètres associés à ce mode, puis, lorsque l'événement se produit, la centrale (1) communique à l'unité esclave (2) un ordre comprenant le code correspondant audit mode de fontionnement, et éventuellement les paramètres associés ; ladite unité esclave (2), à la réception de cet ordre, contrôlant l'appareil qui lui est affecté selon les instructions de fonctionnement contenues dans son propre dispositif de traitement et correspondant audit mode.

Grâce à l'invention il est à tout moment possible d'ajouter à l'ensemble de contrôle une nouvelle unité esclave contenant des informations relatives à de nouvelles fonctions. Ainsi il suffira à la centrale maître de donner un ordre de fonctionnement sans instruction sur les fonctions et les tâches à accomplir.

Les caractéristiques et avantages de l'invention ressortiront d'ailleurs de la description qui va suivre, pris à titre d'exemple non limitatif, en référence au dessin annexé dans lequel :

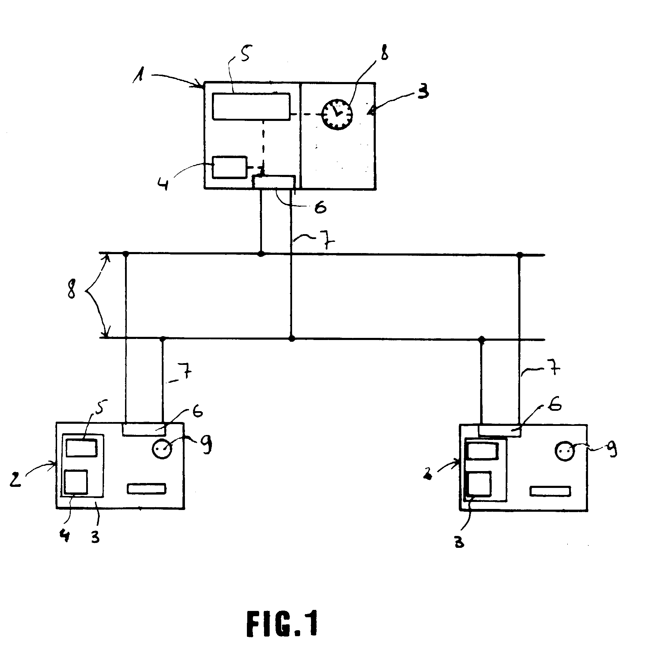

- la figure 1 est une vue schématique d'un ensemble de contrôle pour mettre en oeuvre le procédé selon la revendication 1;

Comme représenté à la figure 1, l'ensemble de contrôle du fonctionnement d'appareils domestiques électriques comprend au moins une unité de contrôle centrale 1 dite unité maître et au moins une unité de contrôle périphérique 2 dite unité esclave susceptible de régir selon plusieurs modes le fonctionnement des appareils domestiques qui y sont reliés, lesdites unités de contrôle comprenant chacune un dispositif de traitement 3 comportant un microprocesseur 4 et une mémoire 5, une interface d'émission et de réception 6, et des moyens de liaison 7 à un réseau de communication 8 tel que par exemple un réseau hertzien ou le réseau de distribution électrique.

Dans le cas d'une transmission des signaux de communication par le réseau de distribution électrique, on utilise la technique bien connue des courants porteurs de ligne (C.P.L).

Les unités esclaves comportent des moyens de connexion 9 pour des appareils électriques domestiques et il est possible à partir d'une programmation centralisée sur l'unité maître 1 de piloter à distance les unités esclaves 2 qui commandent le fonctionnement des appareils électriques essentiellement en agissant sur la puissance électrique qui est fournie aux appareils.

Le dispositif de traitement de l'unité esclave mettant en oeuvre le procédé selon la revendication 1 contient les instructions nécessaires, relatives au mode de fonctionnement, tandis que l'unité maître 1 est uniquement adaptée à communiquer à l'unité esclave 2 un ordre de fonctionnement selon un mode particulier de ladite unité esclave, et éventuellement des paramètres liés à ce mode.

Par exemple, une unité esclave destinée à contrôler le fonctionnement d'un radiateur contient donc des informations relatives à différents modes de chauffage, et sait que lorsqu'on lui demande de fonctionner en MODE 5, par exemple, elle doit délivrer une puissance de 1400 Watts.

En fait, le dispositif de traitement de l'unité esclave contient pour chaque mode de fonctionnement des informations de correspondance entre un code correspondant audit mode, un libellé associé au mode et une série d'instructions relatives au fonctionnement selon ce mode d'un appareil éventuellement relié à l'unité esclave.

Pour revenir à l'unité esclave affectée au chauffage, le dispositif de traitement de cette unité comprendra par exemple des informations de corrélation que l'on pourrait résumer dans un tableau comme suit:
Code 0001 = "Mode 0" = Puissance fournie: 0 Watt
Code 0010 = "Mode 1" = Puissance fournie: 500 Watts
Code 0011 = "Mode 2" = Puissance fournie: 750 Watts
Code 0100 = "Mode 3" = Puissance fournie: 1000 Watts

L'unité centrale maître par contre ne dispose d'aucune information sur les fonctions associées au différents modes, mais son dispositif de traitement comprend une horloge 8 et est adapté à subordonner la communication de l'ordre comprenant le code d'un mode de fonctionnement, soit à une date et à une heure, soit à un événement.

Ainsi, dans l'exemple choisi, si l'on programme par exemple un chauffage à 1000 Watts de 8 heures à 9 heures et 750 Watts de 9 heures à 10 heures, la centrale maître donnera à 8 heures à l'esclave concerné un ordre contenant le code 0100, et à 9 heures un ordre contenant le code 0011 et à 10 heures le code 0001. Les ordres de fonctionnement ne contiennent pas d'instructions quant à la tache à effectuer mais seulement le code d'un mode de fonctionnement.

Le "Mode 2" qui correspond, dans l'unité esclave affectée au contrôle du chauffage, à un chauffage de 750 Watts, correspondra par exemple pour une unité esclave affectée au fonctionnement de l'éclairage à une commande d'extinction.

Dans une réalisation préférée, l'unité esclave comprend en outre des moyens de mesure de grandeurs physiques liées au fonctionnement de l'appareil qui lui est associé de manière à effectuer un contrôle interactif du fonctionnement dudit appareil. Une unité esclave affectée au contrôle du chauffage sera par exemple pourvue d'un capteur de température. On peut alors envisager une programmation de cette unité associant à un mode de fonctionnement non pas une puissance de chauffage mais une température à maintenir dans une pièce : par exemple: "Mode 4"= pièce à 19°C. Lorsque dans cet exemple la centrale émettra un ordre comprenant un code associé pour cet esclave à un fonctionnement en "Mode 4", l'esclave fera le nécessaire pour maintenir la température de la pièce à 19°C.

La valeur 19 peut être un paramètre programmable sur la centrale maître. Si tel est le cas, l'ordre communiqué à l'unité esclave comprendra non seulement le code correspondant au mode 4 mais aussi une valeur numérique, un paramètre, qui sera sans signification pour la centrale mais qui sera interprété comme une consigne de température par l'unité esclave affectée au contrôle du chauffage.

## Revendications

1. Procédé de fonctionnement d'un ensemble de contrôle d'appareils domestiques électriques comprenant au moins une unité de contrôle centrale (1) dite unité maître et au moins une unité de contrôle périphérique (2) dite unité esclave susceptible de régir selon différents modes le fonctionnement des appareils domestiques qui y sont reliés, lesdites unités de contrôle comprenant chacune un dispositif de traitement (3) comportant un micro-contrôleur (4) et une mémoire (5), une interface d'émission et de réception (6), et des moyens de liaison (7) à un réseau de communication (8) tel que par exemple un réseau hertzien ou le réseau de distribution électrique, **caractérisé en ce que** lors de l'installation d'une unité esclave (2) celle-ci transmet à l'unité maître (1) une liste d'au moins un mode pour lequel elle est susceptible de remplir une fonction, un libellé et un code associé à chaque mode, et éventuellement une information relative à l'existence d'au moins une consigne associée respectivement au fonctionnement de chaque mode, tandis que la centrale maître après affichage de chaque libellé se met en attente de la programmation par l'utilisateur d'un événement consécutivement auquel elle devra communiquer à l'unité esclave un ordre de fonctionner selon le mode correspondant au libellé, et éventuellement des paramètres associés à ce mode, puis, lorsque l'événement se produit, la centrale communique à l'unité esclave (2) un ordre comprenant le code correspondant audit mode de fonctionnement, et éventuellement les paramètres associés ; ladite unité esclave, à la réception de cet ordre, contrôlant l'appareil qui lui est affecté selon les instructions de fonctionnement contenues dans son propre dispositif de traitement et correspondant audit mode.

## Patentansprüche

1. Verfahren zum Betrieb eines Kontrollsystems für elektrische Haushaltsgeräte, das wenigstens eine zentrale Kontrolleinheit (1), die sogenannte Master-Einheit, und wenigstens eine periphere Kontrolleinheit (2), die sogenannte Slave-Einheit aufweist, die nach mehreren Modi den Betrieb damit verbundener Haushaltsgeräte leiten kann, wobei die Kontrolleinheiten jeweils eine Verarbeitungseinrichtung (3) mit einem Mikroprozessor (4) und einem Speicher (5), eine Sende- und Empfangsschnittstelle (6) sowie Mittel (7) zur Verbindung mit einem Kommunikationsnetz (8) wie beispielsweise einem Funknetz oder dem elektrischen Verteilungsnetz aufweisen,
**dadurch gekennzeichnet, daß** eine Slave-Einheit (2) beim Einbau zu der Master-Einheit (1) eine Liste mit wenigstens einem Modus, für den sie eine Funktion erfüllen kann, ein Literal und einen jedem Modus zugeordneten Code sowie möglicherweise eine Information bezüglich des Vorliegens wenigstens eines Einstellwerts sendet, der jeweils dem Betrieb jedes Modus zugeordnet ist, während die Master-Zentrale nach dem Anzeigen jedes Literals in Bereitschaft dafür geht, daß der Benutzer ein Ereignis programmiert, nach dem sie der Slave-Einheit einen Funktionsbefehl nach dem dem Literal entsprechenden Modus und möglicherweise diesem Modus zugeordnete Parameter mitteilen muß, dann, wenn das Ereignis eintritt, die Zentrale (1) der Slave-Einheit (2) einen Befehl, der den dem Betriebsmodus entsprechenden Code enthält, und möglicherweise die zugeordneten Parameter mitteilt; wobei die Slave-Einheit (2) bei Empfang dieses Befehls die ihr zugeordnete Vorrichtung nach den Betriebsanweisungen kontrolliert, die in ihrer eigenen Verarbeitungseinrichtung enthalten sind und dem Modus entsprechen.

## Claims

1. Operating method for a control unit for domestic electrical appliances comprising at least one central control unit (1) referred to as the master unit and at least one peripheral control unit (2) referred to as a slave unit able to govern, according to different modes, the functioning of the domestic appliance which are connected thereto, the said control unit each comprising a processing device (3) including a microcontroller (4) and a memory (5), a sending and receiving interface (6) and means (7) of connection to a communication network (8) such as for example a radio network or the electrical distribution network, characterised in that, at the time of installing a slave unit (2), the latter transmits to the master unit (1) a list of at least one mode for which it is able to fulfil a function, a literal and a code associated with each mode, and optionally information relating to the existence of at least one set value associated respectively with the functioning of each mode, whilst the master central unit, after displaying each literal, goes into wait mode for the programming by the user of an event following which it will have to communicate to the slave unit an instruction to operate according to the mode corresponding to the literal, and optionally parameters associated with this mode, and then, when the event occurs, the central unit communicates to the slave unit (2) an instruction comprising the code corresponding to the said operating mode, and optionally associated parameters; the said slave unit, on receiving this instruction, controlling the appliance which is allocated to it in accordance with the operating instructions contained in its own processing device and corresponding to the said mode.
